# EUROPÄISCHE PATENTSCHRIFT

(11) **EP 3 470 939 B1**
(45) Veröffentlichungstag und Bekanntmachung des Hinweises auf die Patenterteilung: **15.09.2021**
(21) Anmeldenummer: 18198913.8
(22) Anmeldetag: 05.10.2018
(51) Int. Cl.: G05B 19/042, G05B 9/02

(54) **VERFAHREN UND SYSTEM ZUM ÜBERWACHEN DER SICHERHEITSINTEGRITÄT EINER DURCH EIN SICHERHEITSSYSTEM BEREITGESTELLTEN SICHERHEITSFUNKTION**
METHOD AND SYSTEM FOR MONITORING THE SECURITY INTEGRITY OF A SECURITY FUNCTION PROVIDED BY A SECURITY SYSTEM
PROCÉDÉ ET SYSTÈME DE SURVEILLANCE DE L'INTÉGRITÉ DE SÉCURITÉ D'UNE FONCTION DE SÉCURITÉ FOURNIE PAR UN SYSTÈME DE SÉCURITÉ

(30) Priorität: 13.10.2017 DE 102017123910
(43) Veröffentlichungstag der Anmeldung: 17.04.2019
(73) Patentinhaber: Phoenix Contact GmbH & Co. KG, 32825 Blomberg (DE)
(72) Erfinder: Borgmann, Hendrik, 32805 Horn-Bad Meinberg (DE)
(74) Vertreter: Blumbach · Zinngrebe Patentanwälte PartG mbB

(56) Entgegenhaltungen:
- DE-A1-102015 103 740
- DE-A1-102016 102 282

## Beschreibung

Die vorliegende Erfindung betrifft ein Verfahren zum Überwachen der Sicherheitsintegrität einer durch ein Sicherheitssystem bereitgestellten Sicherheitsfunktion, sowie eine Vorrichtung zur Durchführung des Verfahrens und ein Verfahren zum Konfigurieren der Vorrichtung. Das Sicherheitssystem stellt dabei eine Sicherheitsfunktion bereit und ist aus wenigstens zwei Teilsystem-Modulen modular aufgebaut, wobei diese an einen Datenübertragungskanal angeschaltet sind und insbesondere jeweils eine Teilsicherheitsfunktion bereitstellen und für eine funktional sichere Datenverarbeitung und/oder -Übertragung ausgebildet sind.

Zur Reduzierung eines Risikos für Mensch oder Umwelt bei automatisierten Prozessen, Maschinen und Anlagen müssen Sicherheitsfunktionen realisiert werden, wie z.B. die Abschaltung einer Maschine nach Drücken eines Not-Aus-Tasters oder die Überführung der Anlage in den sicheren Zustand nach Erkennen eines Fehlers. Hier werden zunehmend fehlersichere Automatisierungssysteme innerhalb der automatisierten Prozesse, Maschinen und Anlagen eingesetzt. Im Allgemeinen realisieren diese fehlersicheren Automatisierungssysteme einerseits die eigentliche Sicherheitsfunktion, wie z.B. Not-Aus, Zweihand-Schaltung, Betriebsartenwahlschalter, oder Ähnliches und andererseits auch fehlererkennende und - beherrschende Maßnahmen z.B. gem. Standards wie IEC 61508, ISO 13849 und anderen festgelegten Mechanismen, welche dem aktuellen Stand der Technik entsprechen.

Hierbei betrifft der Begriff "Sicherheit" im Rahmen der Erfindung sowie in der Beschreibung und den Ansprüchen, soweit nicht anderes angegeben ist, die funktionale Sicherheit. Im englischen Sprachraum wird die funktionale Sicherheit auch mit den Begriffen "safe" und "safety" bezeichnet, in Abgrenzung zu den Begriffen "secure" und "security", welche typischerweise für eine elektrische Sicherheit oder auch den Schutz der technischen Verarbeitung von Informationen zur Verhinderung nicht-autorisierter Datenmanipulationen oder Preisgabe von Informationen verwendet werden.

In der internationalen Norm IEC 61508 bzw. in der im Wesentlichen inhaltsgleichen Europäischen Norm EN 61508 werden funktional sichere elektrische, elektronische und programmierbar elektronische Systeme unter anderem auch hinsichtlich deren Entwicklung beschrieben. Die darin vorgegebenen Anforderungen an den Entwicklungsprozess von sicheren Systemen führen zu signifikant höherem Aufwand und benötigtem Entwicklungsbudget im Vergleich zur Entwicklung von Standardsystemen. Dabei nehmen die Anforderungen mit zunehmendem Sicherheitsintegritätslevel (SIL; SIL1 bis SIL4) zu. Mit dem Begriff Sicherheitsintegritätslevel, oder auch Sicherheitsanforderungsstufe, wird über den jeweiligen Level ein bestimmtes Maß für die notwendige bzw. erreichte Wirksamkeit von Sicherheitsfunktionen zur Risikominderung definiert. Wenn keine sicherheitsgerichteten (auch als sicherheitsbezogen oder sicherheitsrelevant bezeichnet) Anforderungen gelten, so ist die Entwicklung nach den normalen Standards des betrieblichen Qualitätsmanagements durchzuführen. Darüber hinaus stellt der Sicherheitsintegritätslevel SIL1 die geringsten Anforderungen. Je höher der Sicherheitsintegritätslevel, desto höher sind auch die Anforderungen an die Sicherheit.

Die funktionale Sicherheit gemäß der Norm IEC 61508 umfasst zum Beispiel die Anwendung diverser Methoden zur Beherrschung von Fehlern, wie beispielsweise die Vermeidung systematischer Fehler in der Entwicklung, die Überwachung im laufenden Betrieb zur Erkennung von zufälligen Fehlern und/oder die sichere Beherrschung von erkannten Fehlern und den Übergang in einen vorher als sicher definierten Zustand. Alle diese Maßnahmen können Teil von bestimmten, vorher festgelegten Sicherheitsfunktionen sein. Allgemein kann gesagt werden, dass zwei- oder mehrkanalige Systeme, bei denen jeder Kanal für sich allein eine Sicherheitsfunktion auslösen kann, mit weniger technischem Aufwand eine höhere SIL erreichen können als solche, die nur einen Kanal besitzen. Als Kanal wird dabei der Informationsfluss durch eine Sicherheitskette bezeichnet, angefangen zum Beispiel von der Anforderung einer Sicherheitsfunktion, zum Beispiel durch einen Näherungsmelder, eine Lichtschranke, einen Taster, oder eine andere Art von Sensor, endend mit dem Aktor bzw. Stellglied, welches den sicheren Zustand einer Maschine einleitet. Im englischen Sprachraum wird eine Sicherheitskette mit dem Begriff "safety chain" bezeichnet, gegebenenfalls auch mit dem Begriff "safety loop", auch wenn die Sicherheitskette keine Schleife bildet oder bilden muss.

Ist durch geeignete Maßnahmen somit gewährleistet, dass ein elektrisches, elektronisches und/oder programmierbar elektronisches System, aber auch ein einzelnes Teilsystem-Modul oder auch eine einzelne Hardware- und/oder Software-Komponente eine bestimmte Sicherheitsfunktion wirksam erfüllt, gilt dieses System bzw. das jeweilige Teilsystem-Modul im Rahmen der nachfolgenden Beschreibung und der Ansprüche als sicher oder sicherheitsgerichtet. Ein System, das eine oder mehrere bestimmte Sicherheitsfunktionen erfüllen soll und hierbei aus einer Mehrzahl von Teilsystem-Modulen, d.h. aus wenigstens zwei Teilsystem-Modulen, aufgebaut ist, welche jeweils für sich wiederum Teilsicherheitsfunktionen erfüllen sollen, gilt im Rahmen der Erfindung als Sicherheitssystem.

In aktuellen Maschinen und Anlagen werden abhängig von der Ausdehnung der Anlagen und vom Automatisierungsgrad Kommunikationssysteme, oder auch Datenübertragungssysteme, wie z.B. Ethernet-basierte Netzwerke oder Feldbusse, verwendet, die dezentrale Eingabe-/Ausgabe-Geräte, oder kurz E/A-Geräte, wie z.B. Sensoren bzw. Aktoren, und Steuerungen verbinden. Für die Übertragung von sicherheitsrelevanten Daten werden in der Regel sichere Kommunikationsprotokolle, oder auch Datenübertragungs- bzw. Netzwerkprotokolle, benutzt. Sichere Kommunikationsprotokolle sind heutzutage standardisiert, z.B. in der IEC 61784-3. Dort werden basierend auf Grundsätzen der sicheren Netzwerkkommunikation unterschiedliche Sicherheitsprofile beschrieben. Alle diese Netzwerkprotokolle müssen die unterschiedlichen Fehlermodelle, wie z.B. Verfälschung, Verlust, Verzögerung, Vertauschung und so weiter von Daten und/oder Telegrammen, beherrschen. Die Wirksamkeit der risikominimierenden technischen Maßnahmen in Maschinen und/oder Anlagen muss während der Inbetriebnahme einer Maschine oder Anlage durch eine Gesamtsicherheitsvalidierung nachgewiesen und protokolliert bzw. dokumentiert werden. Hierbei müssen alle Sicherheitsfunktionen vor Übergang in die Betriebsphase der Maschine oder Anlage in ihrer Wirksamkeit überprüft werden. Dies ist bei einer vollständigen und nicht veränderten Maschine oder Anlage noch überschaubar, wird allerdings in zunehmend häufiger vorkommenden modularen Maschinen oder Anlagen immer aufwändiger und komplexer.

Wird darüber hinaus eine Vielzahl von Maschinen und/oder Anlagen innerhalb eines Systems eingesetzt, welche auch Sicherheitsfunktionen zusammenwirkend realisieren müssen, bilden diese im Rahmen der Erfindung Teilsystem-Module des Systems, welches dann aus der Vielzahl dieser Teilsystem-Module zusammen ein Sicherheitssystem oder auch mehrere Sicherheitssysteme ausbildet. Hier muss demnach die Wirksamkeit der risikominimierenden technischen Maßnahmen durch eine Gesamtsicherheitsvalidierung des die beteiligten Teilsystem-Module übergreifenden Sicherheitssystems nachgewiesen werden. Als Beispiel für ein solches Sicherheitssystem sei eine Stanzanlage genannt, welche aus einer Zuführmaschine, einer Stanzmaschine und einer Auswurfmaschine gebildet ist, die alle drei bestimmte Sicherheitsfunktionen realisieren müssen, wobei auch die Stanzanlage insgesamt als zu betrachtendes Sicherheitssystem, d.h. beim Zusammenwirken der einzelnen Teilsystem-Module, d.h. gemäß Beispiel die Zuführmaschine, Stanzmaschine und Auswurfmaschine, bestimmte Sicherheitsfunktionen realisieren muss. Ein solches Sicherheitssystem im Rahmen der Erfindung besitzt somit in der Regel mehrere fehlersichere Automatisierungseinrichtungen, die in verschiedenen Teilsystem-Modulen innerhalb eines Systems, d.h. eines Gesamtsystems angeordnet sind, jedoch innerhalb des Systems zusammenwirken und übergreifend über die beteiligten Teilsystem-Module ein Sicherheitssystem ausbilden.

Eine Gesamtsicherheitsvalidierung des die beteiligten Teilsystem-Module übergreifenden Sicherheitssystems muss jedoch nicht nur bei der ersten Inbetriebnahme erfolgen. Dies gilt ebenso für jede Änderung der Konfiguration eines modularen Sicherheitssystems, einer modularen Anlage oder Maschine. Für jede Konfiguration müssen die Kennwerte neu berechnet und dokumentiert, neue Fehlerbetrachtungen, Fehlerrechnungen und Validationsschritte zum Nachweisen der für das System oder die Maschine notwendigen Sicherheitskategorie, bzw. Sicherheitslevels, z.B. SIL4, ausgeführt werden, so z.B. beim Austausch eines einzelnen Moduls oder auch in Folge von Alterungsprozessen innerhalb einzelner Module. Dabei müssen die sicherheitsrelevanten Kennwerte der einzelnen Module entsprechend ihrem Zusammenwirken funktional kombiniert werden. Diese Kennwerte sind typischerweise in Gerätebeschreibungen dokumentiert und müssen zum Zeitpunkt der Berechnung aktuell sein. Die einschlägigen Sicherheitsnormen und Richtlinien verpflichten die Maschinenhersteller, die sicherheitsrelevanten Kennwerte wie z.B. Ausfallraten, Diagnosedeckungsgrad, SFF (Safe Failure Fraction), HFT (Hardware Fault Tolerance) oder Reaktionszeiten für einzelne Module anzugeben. Für die Berechnung der sicherheitsrelevanten Kennwerte werden heute Offline-Software-Tools, wie z.B. SISTEMA (Sicherheit von Steuerungen an Maschinen) vom Institut für Arbeitsschutz der Deutschen Gesetzlichen Unfallversicherung (IFA), verwendet.

Des Weiteren muss aber auch während des Betriebs des Sicherheitssystems bzw. der sicheren Anlage oder Maschine die Funktionsfähigkeit sowie die Wirksamkeit der technischen, risikominimierenden Maßnahmen in definierten Zeitintervallen getestet werden.

Der Modularisierung von Maschinen, Anlagen oder Sicherheitssystemen sowie dynamischen Konfigurationsänderungen oder adaptiven Zusammenstellungen von vormals unbekannten Sicherheitsmodulen tragen aber die heutigen Sicherheitsstandards, wie z.B. IEC 61508, EN 13849, IEC 62061, zumindest bisher nur teilweise Rechnung.

Ferner ist die heutige Zeit geprägt von cyber-physischen Systemen (CPS, engl. cyber physical systems), der Verteilung von Intelligenzen und dem Internet der Dinge (engl. Internet of things, IoT). Unter Industrie 4.0 wird der Einzug von Internet-Technologien in die Automatisierungstechnik beschrieben. Die komplette Vernetzung intelligenter Geräte vom Sensor/Aktor bis zur Steuerung ist die Voraussetzung für Modularisierung, Wiederverwendung und Adaptionsfähigkeit von Maschinen- und Anlagenmodulen. Produktionsvorgänge können dann weiter optimiert werden und es kann z.B. in Losgrößen 1 gefertigt werden. Die Einbindung und Nutzung von Cloud-Diensten ermöglicht z.B. vorausschauende Diagnosen. All diese Trends und Technologien tragen ihrerseits zur steigenden Komplexität modularer Anlagen, Maschinen und Sicherheitssysteme sowie zum erhöhten Aufwand bei der Gesamtsicherheitsvalidierung bei.

Es versteht sich, dass dieser für die Gesamtsicherheitsvalidierung erforderliche und zunehmend höhere Aufwand nicht den Flexibilitätsanforderungen der Hersteller und Betreiber modularer Sicherheitssysteme, Anlagen und Maschinen entspricht.

Diesbezüglich schlägt die EP 2 359 201 ein Verfahren zum Bestimmen einer Sicherheitsstufe in einem Automatisierungsnetzwerk mit einer Mehrzahl von sicherheitsrelevanten Teilnehmern vor. Dieses umfasst die Schritte: selbsttätiges Ermitteln der daten- und ablauftechnischen Verknüpfungen zwischen den Teilnehmer im Automatisierungsnetzwerk durch ein Konfigurationserfassungsmodul; selbsttätiges Ermitteln der teilnehmerspezifischen Sicherheitskenndaten durch ein Kenndatenerfassungsmodul; und Berechnen der Sicherheitsstufe in dem Automatisierungsnetzwerk mithilfe einer Berechnungsvorschrift, die die ermittelten daten- und ablauftechnischen Verknüpfungen der Teilnehmer im Automatisierungsnetzwerk und die ermittelten teilnehmerspezifischen Sicherheitskenndaten verbindet. Das Konfigurationserfassungsmodul und das Kenndatenerfassungsmodul sind dabei Teil eines zentralen Sicherheitsmanagers, der online über ein Netzwerk auf die an einer Sicherheitsfunktion beteiligten Komponenten zugreift.

Darüber hinaus schlägt die hiesige Anmelderin in deren früheren Anmeldung DE 10 2015 108 359 ein Verfahren zur automatischen Validierung von Sicherheitsfunktionen an einem modular aufgebauten Sicherheitssystem vor, wobei an das Sicherheitssystem eine auch als Safety-Validator bezeichnete zentrale Überprüfungseinrichtung angeschaltet wird. Das Verfahren umfasst u.a. die Schritte: Übertragen der lokalen, modulspezifischen sicherheitsrelevanten Ist-Kennwerte aus den einzelnen Teilsystem-Modulen an die Überprüfungseinrichtung, automatisches Verarbeiten der ausgelesenen, lokalen, modulspezifischen sicherheitsrelevanten Ist-Kennwerte zu sich beim Zusammenwirken der einzelnen Teilsystem-Module ergebenden, übergreifenden sicherheitsrelevanten Ist-Kennwerten, und zwar durch jene Überprüfungseinrichtung; automatisches Vergleichen der sich ergebenden, übergreifenden sicherheitsrelevanten Ist-Kennwerte mit den im Speicher der Überprüfungseinrichtung hinterlegten Soll-Kennwerten des Systems, und zwar durch die Überprüfungseinrichtung und automatisches Generieren eines Reaktionssignals in Abhängigkeit vom Ergebnis des Vergleiches. Somit überprüft der sogenannte Safety-Validator während der Inbetriebnahme und zur Laufzeit online sich ändernde sicherheitsrelevante Parameter von dezentralen Teilsicherheitsfunktionen, kombiniert diese, überwacht die Einhaltung vorkonfigurierter Grenzen und kann bei deren Überschreitung das System in einen sicheren Zustand überführen.

Des Weiteren schlägt die hiesige Anmelderin in deren früheren Anmeldung DE 10 2015 103 740 ein Verfahren zum Verarbeiten und Übertragen von Daten innerhalb eines funktional sicheren elektrischen, elektronischen oder programmierbar elektronischen Systems vor, welches aus wenigstens zwei Sub-Systemen aufgebaut wird, welche jeweils einem bestimmten Sicherheitslevel genügen. Es umfasst die Schritte: Verarbeiten von Daten mittels der sicheren Hardware- und/oder Software-Komponente eines ersten der Sub-Systeme zu funktional sicheren Daten eines ersten Sicherheitslevels und Hinzufügen zu diesen Daten wenigstens ein Kennzeichnungsattribut, welches die Eignung dieser Daten für den Einsatz dieses ersten Sicherheitslevels kennzeichnet; Übertragen dieser Daten einschließlich des hinzugefügten Kennzeichnungsattributs an ein zweites dieser Sub-Systeme; und Prüfen des empfangenen Kennzeichnungsattributs durch das zweite Sub-System mittels dessen sicherer Hardware- und/oder Software-Komponente dahingehend, ob der Sicherheitslevel, den dieses Kennzeichnungsattribut kennzeichnet, gegenüber dem Sicherheitslevel, welchem das zweite Sub-System genügt, gleich oder ungleich ist, und, wenn die Prüfung ungleiche Sicherheitslevel ergibt funktional sicheres Weiterverarbeiten der Daten basierend auf dem geringeren Sicherheitslevel.

Sowohl die EP 2 359 201 als auch die DE 10 2015 108 359 sehen eine zentrale Instanz in Form eines Sicherheitsmanagers bzw. einer Überprüfungseinrichtung vor. Dies kann jedoch zu einer Einschränkung der Flexibilität und Handhabbarkeit führen, insbesondere mit Blick auf die Überwachung der Sicherheitskette einer Gesamtsicherheitsfunktion eines modularen Sicherheitssystems während des laufenden Betriebs. Außerdem besteht ein zusätzlicher Hardwareaufwand.

Aus DE 10 2016 102282 A1 ist ferner ein Verfahren zum Überwachen einer Datenverarbeitung und -übertragung in einer Sicherheitskette eines Sicherheitssystems sowie eine Vorrichtung zur Durchführung des Verfahrens bekannt, wobei das Sicherheitssystem eine Gesamtsicherheitsfunktion bereitstellt und aus wenigstens zwei Teilsystem-Modulen modular aufgebaut ist, und wobei wenigstens die zwei Teilsystem-Module an einen Datenübertragungskanal angeschlossen sind und jeweils eine Teilsicherheitsfunktion bereitstellen und für eine funktional sichere Datenverarbeitung und/oder -übertragung ausgebildet sind, und wobei jedes eine Teilsicherheitsfunktion bereitstellende Teilsystem-Modul zweckmäßigerweise nicht nur die funktional sicheren Daten überträgt, sondern diese um weitere Informationen in Form von Ist-Kennwerten ergänzt, wobei diese zusätzlichen Informationen von einem in der Sicherheitskette nachfolgenden eine Teilsicherheitsfunktion bereitstellenden Teilsystem-Modul empfangen, verarbeitet und ausgewertet bzw. mit Soll-Kennwerten verglichen werden.

Die Aufgabe der vorliegenden Erfindung besteht darin, die Überwachung einer durch ein Sicherheitssystem, insbesondere eine Sicherheitskette, bereitgestellten Sicherheitsfunktion, insbesondere die Überwachung auf Einhaltung einer vorgegebenen Sicherheitsintegrität, zu vereinfachen und/oder zu verbessern. Zudem soll eine solche vereinfachte Überwachung insbesondere auch bei dynamischen und/oder sich in ihrer Konfiguration ändernden modularen Sicherheitssystemen ermöglicht werden.

Diese Aufgabe wird durch die Merkmale der unabhängigen Ansprüche gelöst. Vorteilhafte Ausführungsformen sind Gegenstand der abhängigen Ansprüche, wobei die angegebenen Merkmale und Vorteile im Wesentlichen für alle unabhängigen Ansprüche gelten können.

Ein Kerngedanke der Erfindung ist darin zu sehen, dass in einem Sicherheitssystem, welches wenigstens zwei Teilsystem-Module umfasst, und welches, gegebenenfalls mit zusätzlich an ein oder mehrere der Teilsystem-Module angeschlossenen Sensoren und/oder Aktoren, eine Sicherheitskette bildet und zum Ausführen einer Sicherheitsfunktion ausgebildet ist, die Sicherheitsintegrität des Sicherheitssystems überwacht wird, indem in den Teilsystem-Modulen jeweils individuelle Sicherheitskennwerte ermittelt oder hinterlegt werden, welche entlang der Sicherheitskette weitergereicht werden und am Ende der Sicherheitskette, insbesondere im letzten Teilsystem-Modul, welches die Aktorik steuert, aus den empfangenen Sicherheitskennwerten die Sicherheitsintegrität der Sicherheitsfunktion ermittelt und mit einem Sollwert verglichen wird.

Ein Verfahren zum Überwachen der Sicherheitsintegrität einer durch ein Sicherheitssystem bereitgestellten Sicherheitsfunktion, wobei das Sicherheitssystem wenigstens ein erstes und ein zweites Teilsystem-Modul umfasst, weist die folgenden Schritte auf:
- Verarbeiten von Daten zu funktional sicheren Daten in dem ersten Teilsystem-Modul,
- Ermitteln wenigstens eines ersten Sicherheitskennwertes durch das erste Teilsystem-Modul bezüglich der durch das erste Teilsystem-Modul ausgeführten Datenverarbeitung und/oder Datenübertragung,
- Übertragen der funktional sicheren Daten und des ersten Sicherheitskennwertes vom ersten Teilsystem-Modul zum zweiten Teilsystem-Modul,
- Ermitteln wenigstens eines zweiten Sicherheitskennwertes durch das zweite Teilsystem-Modul bezüglich der durch das zweite Teilsystem-Modul ausgeführten Datenverarbeitung und/oder Datenübertragung, und
- Übertragen wenigstens eines dritten Sicherheitskennwertes zum zweiten Teilsystem-Modul,
- Prüfen der Sicherheitsintegrität der Sicherheitsfunktion im zweiten Teilsystem-Modul in Abhängigkeit des ersten, zweiten und dritten Sicherheitskennwertes, und
- Auslösen einer vorbestimmten Sicherheitsreaktion in Abhängigkeit des Prüfergebnisses.

Die wenigstens zwei Teilsystem-Module bilden eine Sicherheitskette, wobei das erste Teilsystem-Modul insbesondere den Anfang und das zweite Teilsystem-Modul das Ende der Sicherheitskette bildet.

In einem häufigen Anwendungsfall wird die Sicherheitsfunktion durch einen Sensor, wie zum Beispiel ein Not-Aus-Taster, ein Lichtgitter, eine Schutztür oder ähnliches, ausgelöst, wobei der Sensor an ein Eingabe-Modul eines Automatisierungssystems angeschlossen ist.

Dementsprechend ist in einer Ausführungsform der dritte Sicherheitskennwert im ersten Teilsystem-Modul hinterlegt und wird vom ersten Teilsystem-Modul zum zweiten Teilsystem-Modul übertragen, wobei das erste Teilsystem-Modul als ein Eingabe-Modul eines Automatisierungssystems ausgebildet ist, an welches ein Sensor angeschlossen ist, wobei das Erzeugen funktional sicherer Daten in dem ersten Teilsystem-Modul ein Erfassen eines Sensorsignals mittels des Sensors und das Verarbeiten des erfassten Sensorsignals zu den funktional sicheren Daten umfasst, und wobei der dritte Sicherheitskennwert ein sicherheitsrelevantes Attribut des Sensors angibt.

In einer alternativen Ausführungsform wird der dritte Sicherheitskennwert durch wenigstens ein drittes Teilsystem-Modul ermittelt und vom dritten Teilsystem-Modul zum zweiten Teilsystem-Modul übertragen.

Die Sicherheitskette, d.h. das Sicherheitssystem, kann somit weitere Teilsystem-Module, auch eine Mehrzahl weiterer Teilsystem-Module, umfassen, wobei diese insbesondere entlang der Sicherheitskette zwischen dem ersten und zweiten Teilsystem-Modul angeordnet sein können.

Bei einer Mehrzahl von Teilsystem-Modulen können in jedem Teilsystem-Modul entlang der Sicherheitskette jeweils empfangene funktional sichere Daten weiterübertragen werden oder zu neuen funktional sicheren Daten verarbeitet werden, welche dann weiterübertragen werden. Die Sicherheitskennwerte werden vorteilhaft zusammen mit den erzeugten funktional sicheren Daten zum nächsten Teilsystem-Modul der Sicherheitskette, im einfachsten Fall direkt zum zweiten Teilsystem-Modul übertragen, wobei vorteilhaft beim Übertragen die funktional sicheren Daten und der bzw. die Sicherheitskennwerte gemäß einem zugrunde liegenden sicheren Datenübertragungsprotokoll zusammen in einem gemeinsamen protokollspezifischen Datenbereich oder getrennt voneinander in separaten protokollspezifischen Datenbereichen übertragen werden.

Hierbei ist es möglich, die Datenübertragung, insbesondere transparent, in bestehende (sichere) Protokolle zu integrieren. Es ist aber auch möglich, neue (sichere) Protokolle vorzusehen, mit deren Hilfe die Datenübertragung implementiert wird.

Das Prüfen der Sicherheitsintegrität der Sicherheitsfunktion umfasst vorteilhaft das Ermitteln einer Sicherheitsintegrität der Sicherheitsfunktion in Abhängigkeit des ersten, zweiten und dritten Sicherheitskennwertes und Vergleichen der ermittelten Sicherheitsintegrität mit einem Vergleichswert, wobei der Vergleichswert vorzugsweise im zweiten Teilsystem-Modul hinterlegt ist. Denkbar ist auch, dass der Vergleichswert durch das zweite Teilsystem-Modul abrufbar ist, um eine dynamische Anpassung des Vergleichswertes zu ermöglichen.

Das Auslösen der vorbestimmten Sicherheitsreaktion in Abhängigkeit des Prüfergebnisses erfolgt insbesondere bei negativem Vergleichsergebnis, während bei positivem Vergleichsergebnis die funktional sicheren Daten auf übliche Weise weiterverarbeitet werden, um die Sicherheitsfunktion auszuführen, deren Sicherheitsintegrität überwacht wird. Das Weiterverarbeiten der funktional sicheren Daten kann auch bei negativem Vergleichsergebnis vorgesehen sein, wobei die vorbestimmte Sicherheitsreaktion zusätzlich ausgeführt wird. Ein negatives Vergleichsergebnis liegt insbesondere dann vor, wenn die ermittelte Sicherheitsintegrität unter dem Vergleichswert liegt.

In einem häufigen Anwendungsfall bewirkt die Sicherheits-funktion das Ausführen einer sicherheitsgerichteten Aktion eines Aktors, beispielsweise das Abschalten einer gefahrbringenden Einrichtung, beispielsweise durch Abschalten eines Motors. Dementsprechend ist in einer vorteilhaften Ausführungsform des Sicherheitssystems das zweite Teilsystem-Modul als ein Ausgabe-Modul eines Automatisierungssystems ausgebildet, an welches ein Aktor abgeschlossen ist. Vorteilhaft ist im zweiten Teilsystem-Modul ein vierter Sicherheitskennwert hinterlegt, welcher ein sicherheitsrelevantes Attribut des wenigstens einen an das zweite Teilsystem-Modul angeschlossenen Aktors angibt, wobei das zweite Teilsystem-Modul die Sicherheitsintegrität der Sicherheitsfunktion in Abhängigkeit des vierten Sicherheitskennwertes prüft.

Denkbar ist auch, dass das erste Teilsystem-Modul als intelligenter Sensor und/oder das zweite Teilsystem-Modul als intelligenter Aktor ausgebildet ist.

Das Verfahren sieht insbesondere vor, dass ein Teilsystem-Modul des Sicherheitssystems einen empfangenen Sicherheitskennwert an das zweite Teilsystem-Modul weiterüberträgt. Insbesondere erfolgt eine Weiterübertragung durch jedes der Teilsystem-Module des Sicherheitssystems jedes empfangenen Sicherheitskennwertes an das zweite Teilsystem-Modul, um das zweite Teilsystem-Modul in die Lage zu versetzen, in Abhängigkeit aller empfangenen Sicherheitskennwerte die Sicherheitsintegrität der Sicherheitsfunktion zu prüfen.

Denkbar ist auch, dass ein Teilsystem-Modul einen Sicherheitskennwert bezüglich der durch dieses Teilsystem-Modul ausgeführten Datenverarbeitung und/oder Datenübertragung ermittelt, und aus diesem ermittelten Sicherheitskennwert und einem von einem anderen Teilsystem-Modul empfangenen Sicherheitskennwert einen neuen Sicherheitskennwert ermittelt und an ein anderes Teilsystem-Modul, insbesondere an das zweite Teilsystem-Modul weiterleitet. Mit anderen Worten kann ein Teilsystem-Modul beispielsweise einen Sicherheitskennwert empfangen, welcher einen Wert für eine Ausfallwahrscheinlichkeit, z.B. in Form eines PFD- oder PFHd-Wertes, umfasst, seine eigene Ausfallwahrscheinlichkeit aufschlagen und den so neu ermittelten Sicherheitskennwert an das nächste Teilsystem-Modul, welches das zweite Teilsystem-Modul sein kann, weiterleiten.

Werden alle von Teilsystem-Modulen ermittelten und/oder in diesen hinterlegten Sicherheitskennwerte nur an das zweite Teilsystem-Modul weitergeleitet, kann vorteilhaft auf einen Rechenaufwand in anderen Teilsystem-Modulen für das Neuermitteln von Sicherheitskennwerten verzichtet werden.

In einer bevorzugten Ausführungsform des Verfahrens umfasst das Sicherheitssystem wenigstens ein Teilsystem-Modul, welches als Steuereinrichtung eines Automatisierungssystems ausgebildet ist, wobei die Steuerungseinrichtung beispielsweise als SPS (Speicherprogrammierbare Steuerung) ausgebildet ist.

Bei einer mehrkanaligen Ausgestaltung des Sicherheitssystems können auch mehrere erste und/oder zweite Teilsystem-Module vorgesehen sein, wobei in diesem Fall auch mehrere erste Teilsystem-Module mit dem gleichen, als Steuereinrichtung ausgebildeten dritten Teilsystem-Modul verbunden sein können.

Es ist auch denkbar, dass an ein Eingabe-Modul, welches insbesondere das erste Teilsystem-Modul des Sicherheitssystems bildet, wenigstens zwei Sensoren angeschlossen sind, wobei für jeden der angeschlossenen Sensoren ein zugeordneter Sicherheitskennwert in dem Eingabe-Modul hinterlegt ist, welcher übertragen wird.

Die oben beschriebenen Sicherheitskennwerte können unterschiedliche physikalische Größen angeben. Mit besonderem Vorteil ist wenigstens einer der Sicherheitskennwerte ein SIL-Wert, ein PL-Wert, ein PFHd-Wert oder ein PFD-Wert.

Ein SIL-Wert gibt das jeweilige Sicherheitsintegritäts-Level des betreffenden Moduls an, ein PL-Wert das jeweilige Performance-Level des betreffenden Moduls. Ein PFHd-Wert (PFHd : Probability of dangerous failure per hour) gibt die Wahrscheinlichkeit für einen gefährlichen Ausfall pro Stunde für das betreffende Modul an, ein PFD-Wert (PFD : Probability of dangerous failure on demand) die Wahrscheinlichkeit für einen gefährlichen Ausfall bei Anforderung.

Typischerweise wird ein PFD-Wert bei einer Betriebsart mit niedriger Anforderungsrate angegeben und eine PFHd-Wert bei einer Betriebsart mit hoher bzw. kontinuierlicher Anforderungsrate. Die PFD- oder PFHd-Werte repräsentieren jeweils die gefährliche Versagenswahrscheinlichkeit und erlauben die Berechnung der Sicherheitsintegrität, insbesondere eines SIL-Wertes.

Es können aber noch andere Größen durch die Sicherheitskennwerte angegeben werden, wie zum Beispiel einer oder mehrere der sicherheitsrelevanten Kennwerte Ausfallrate, Diagnosedeckungsgrad, SFF (Safe Failure Fraction) oder HFT (Hardware Fault Tolerance).

Die EN ISO 13849-1 definiert den Diagnosedeckungsgrad (DC) als Maß für die Wirksamkeit der Diagnose als das Verhältnis der erkannten gefährlichen Ausfälle zu den gesamten gefährlichen Ausfällen.

Ein SFF-Wert gibt den Anteil sicherer Ausfälle an und ist somit ein Maß dafür, welcher Anteil aller denkbaren Fehler in die sichere Richtung geht. Ein Wert von HFT = N gibt an, dass N + 1 Hardware-Fehler, ungünstig verteilt, zum Verlust der Sicherheitsfunktion führen.

Es sei angemerkt, dass auch mehrere erste, zweite, dritte und/oder vierte Sicherheitskennwerte vorgesehen sein können, welche beispielswiese unterschiedliche der oben angegebenen Größen angeben können.

Ein System zur Durchführung eines Verfahrens wie oben beschrieben, welches zum Ausführen einer Sicherheitsfunktion ausgebildet ist, umfasst ein erstes und ein zweites Teilsystem-Modul, welches jeweils zum Verarbeiten von Daten zu funktional sicheren Daten ausgebildet ist, wobei das erste Teilsystem-Modul über einen Datenübertragungskanal mit dem ersten Teilsystem-Modul verbunden ist, und wobei das erste Teilsystem-Modul zum Ermitteln wenigstens eines ersten Sicherheitskennwertes bezüglich der durch das erste Teilsystem-Modul ausgeführten Datenverarbeitung und/oder Datenübertragung und zum Übertragen des ersten Sicherheitskennwertes zum zweiten Teilsystem-Modul ausgebildet ist, und wobei das zweite Teilsystem-Modul zum Ermitteln wenigstens eines zweiten Sicherheitskennwerts bezüglich der durch das zweite Teilsystem-Modul ausgeführten Datenverarbeitung und/oder Datenübertragung, zum Empfangen eines dritten Sicherheitskennwertes, zum Prüfen der Sicherheitsintegrität der Sicherheitsfunktion in Abhängigkeit des ersten, zweiten und dritten Sicherheitskennwertes, und zum Auslösen einer vorbestimmten Sicherheitsreaktion in Abhängigkeit des Prüfergebnisses ausgebildet ist.

Eine beispielhafte Vorrichtung zum Einsatz als Teilsystem-Modul in einem Sicherheitssystem, welches zum Ausführen einer Sicherheitsfunktion ausgebildet ist, ist ausgebildet zum Verarbeiten von Daten zu funktional sicheren Daten, zum Empfangen wenigstens eines ersten und eines dritten Sicherheitskennwertes, zum Ermitteln wenigstens einen zweiten Sicherheitskennwertes bezüglich der durch das Teilsystem-Modul ausgeführten Datenverarbeitung und/oder Datenübertragung, zum Prüfen der Sicherheitsintegrität der Sicherheitsfunktion in Abhängigkeit des ersten, zweiten und dritten Sicherheitskennwertes, und zum Auslösen einer vorbestimmten Sicherheitsreaktion in Abhängigkeit des Prüfergebnisses. Ein beispielhaftes Verfahren zum Konfigurieren einer solchen Vorrichtung sieht vor, einen Sicherheitsparameter zu der Vorrichtung zu übertragen, welcher einen Sicherheitskennwert bezüglich einer an die Vorrichtung angeschlossenen Einrichtung, insbesondere eines Sensors oder Aktors, angibt, und den Sicherheitsparameter in der Vorrichtung zu speichern, wobei die Vorrichtung dazu ausgebildet ist, den gespeicherten Sicherheitsparameter an ein anderes Teilsystem-Modul des Sicherheitssystems zu übertragen oder die Sicherheitsintegrität der Sicherheitsfunktion in Abhängigkeit des Sicherheitsparameters zu prüfen.

Es sei noch angemerkt, dass die Teilsystem-Module des Sicherheitssystems zur Übertragung der Daten und Sicherheitskennwerte an wenigstens einen Datenübertragungskanal angeschlossen sind, sowie dass die Teilsystem-Module des Sicherheitssystems insbesondere jeweils eine Teilsicherheitsfunktion bereitstellen und für eine funktional sichere Datenverarbeitung und/oder -übertragung ausgebildet sind.

Es sei ferner angemerkt, dass der Begriff des Datenübertragungskanals nicht zwingend das Vorhandensein eines Bussystems bedingt. Vielmehr liegen im Rahmen der Erfindung auch Teilsystem-Module, z.B. modulare Maschinen, wobei die Module zur Datenübertragung nicht über Bussysteme miteinander vernetzt sind. Eine mögliche Alternative im Rahmen des Begriffs "Datenübertragungskanal" sind beispielsweise Teilsystem-Module, bei denen sich der "Datenübertragungskanal", an welchen diese angeschaltet sind, aus jeweiligen internen, miteinander verschalteten Backplanebussen zusammensetzt. Die Teilsystem-Module können somit z.B. auch modulare Geräte mit internem Backplanebus sein. Auch ist denkbar, dass der Datenübertragungskanal über mehrere, insbesondere auch hierarchisch strukturierte Kommunikationsnetzwerke verläuft, die beispielsweise über ein Koppelmodul oder Gateway miteinander verbunden sind, wobei das Koppelmodul bzw. das Gateway in diesem Fall insbesondere ein Teilsystem-Modul des Sicherheitssystems bildet.

Die vorliegende Erfindung bietet viele Vorteile. Vor allem ermöglicht sie auf einfache Weise die permanente Überwachung der Sicherheitsintegrität einer von einer Sicherheitskette in einem modularen Sicherheitssystem ausgeführten Sicherheitsfunktion während des laufenden Betriebs.

Der Anwender hat die Aufgabe, die Einhaltung der erforderlichen Sicherheitsintegrität nachzuweisen. Diese Nachweise sind heute stets mit Aufwand verbunden und werden daher oft entweder gar nicht oder unvollständig erstellt oder im Falle von Änderungen nicht nachgezogen. Ein besonderer Vorteil der Erfindung besteht darin, durch Weitergabe von Sicherheitskennwerten entlang einer Sicherheitskette eine Möglichkeit zu schaffen, die Sicherheitsintegrität einer Sicherheitsfunktion ständig zu prüfen und die Einhaltung eines Sollwertes zu überwachen.

Die Weitergabe der Sicherheitskennwerte ist somit auch eine wichtige Grundlage beispielsweise für eine Anlagenübergreifende sichere Kommunikation und dem Zusammenstellen modularer Anlagen im Industrie 4.0-Umfeld.

Diese und weitere Merkmale und Vorteile der vorliegenden Erfindung ergeben sich auch aus den Ausführungsbeispielen, welche nachfolgend unter Bezugnahme auf die beiliegenden Zeichnungen näher erläutert werden. Es zeigt dabei
- Fig. 1: eine schematische Darstellung eines ersten Ausführungsbeispiels eines Automatisierungssystems, in welchem ein erfindungsgemäßes Verfahren vorteilhaft ausgeführt werden kann,
- Fig. 2: eine schematische Darstellung eines zweiten Ausführungsbeispiels eines Automatisierungssystems, in welchem ein erfindungsgemäßes Verfahren vorteilhaft ausgeführt werden kann,
- Fig. 3: eine schematische Darstellung eines ersten bevorzugten Ausführungsbeispiels eines Sicherheitssystems, und
- Fig. 4: eine schematische Darstellung eines zweiten bevorzugten Ausführungsbeispiels eines Sicherheitssystems.

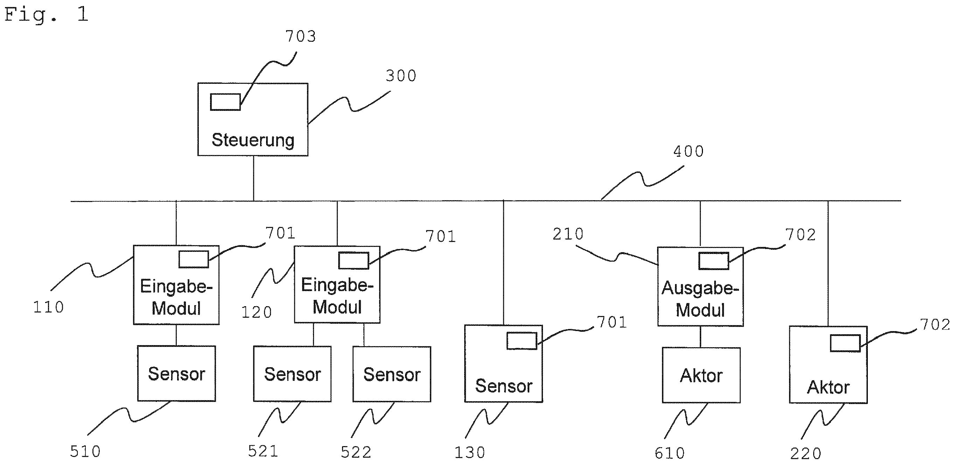

Die Figur 1 zeigt eine schematische Darstellung eines Automatisierungssystems, wobei im dargestellten Ausführungsbeispiel mehrere Eingabe- und Ausgabe-Module über eine Kommunikations-Netzwerk 400 mit einer zentralen Steuereinrichtung 300 verbunden sind. Beispielhaft ist an das Eingabe-Modul 110 ein Sensor 510 angeschlossen, und an das Eingabe-Modul 120 zwei Sensoren 521 und 522, wobei die zwei Sensoren insbesondere als redundante Sensoren eingesetzt werden. Ferner ist ein intelligenter Sensor 130 vorgesehen, welcher direkt mit dem Kommunikationsnetzwerk verbunden ist und mit der Steuerung 300 kommunizieren kann.

Ferner ist im dargestellten Ausführungsbeispiel ein Ausgabe-Modul 210 vorgesehen, welches über das Kommunikations-Netzwerk 400 mit der Steuereinrichtung 300 verbunden ist, sowie ein intelligenter Aktor 220, welcher direkt mit dem Kommunikationsnetzwerk 400 verbunden ist und mit der Steuerung 300 kommunizieren kann.

In dem in Fig. 1 dargestellten System kann das erfindungsgemäße Verfahren ausgeführt werden, wobei je nachdem, für welche Sicherheitsfunktion die Sicherheitsintegrität überwacht werden soll, unterschiedliche der dargestellten Module Teilsystem-Module des Sicherheitssystems bilden können, welches die Sicherheitsfunktion ausführt.

Beispielsweise kann das Sicherheitssystem das Eingabe-Modul 110 als erstes Teilsystem-Modul und das Ausgabe-Modul 210 als zweites Teilsystem-Modul umfassen, wobei das Eingabe-Modul 110 Sensorsignale des angeschlossenen Sensors 510 zu funktional sicheren Daten verarbeitet. Zugeordnet zu den funktional sicheren Daten ermittelt das Eingabe-Modul 110 einen ersten Sicherheitskennwert bezüglich der durch das erste Eingabe-Modul 110 ausgeführten Datenverarbeitung, wobei das Eingabe-Modul 110 zu diesem Zweck eine Verarbeitungseinheit 701 umfasst.

Das Eingabe-Modul 110 überträgt die funktional sicheren Daten zusammen mit dem ersten Sicherheitskennwert zu der Steuerung 300, welche in diesem Ausführungsbeispiel ein drittes Teilsystem-Modul des Sicherheitssystems bildet. Die Steuerung 300 verarbeitet die vom Eingabe-Modul 110 empfangenen Eingangsdaten und erzeugt mit Hilfe eines in der Steuerung 300 hinterlegten Anwenderprogramms Ausgangsdaten, welche die Steuerung an das Ausgabe-Modul 210 überträgt. Zusammen mit den Ausgangsdaten wird von der Steuerung 300 der vom Eingabemodul 110 empfangene erste Sicherheitskennwert an das Ausgabe-Modul 210 ungeändert weiterübertragen. Weiterhin ermittelt die Steuerung einen dritten Sicherheitskennwert bezüglich der durch die Steuerung 300 ausgeführten Datenverarbeitung und/oder Datenübertragung mittels einer Verarbeitungseinheit 703 und überträgt diesen dritten Sicherheitskennwert zusammen mit den Ausgangsdaten und dem ersten Sicherheitskennwert an das Ausgabe-Modul 210.

Das Ausgabe-Modul 210 ermittelt seinerseits einen zweiten Sicherheitskennwert bezüglich der durch das Ausgabe-Modul 210 ausgeführten Datenverarbeitung und/oder Datenübertragung und ermittelt eine Sicherheitsintegrität der Sicherheitsfunktion in Abhängigkeit des empfangenen ersten und dritten, sowie des selbst ermittelten zweiten Sicherheitskennwertes, vergleicht die ermittelte Sicherheitsintegrität mit einem Vergleichswert, und löst in Abhängigkeit des Vergleichsergebnisses eine vorbestimmte Sicherheitsreaktion aus. Zu diesem Zweck weist das Ausgabe-Modul 210 eine Verarbeitungseinheit 702 auf.

Im beschriebenen Beispiel wird die Sicherheitsfunktion durch den an das Eingabe-Modul 110 angeschlossenen Sensor 510, welcher beispielsweise als Not-Aus-Taster, Lichtgitter oder Schutztür ausgebildet sein kann, ausgelöst. Vorteilhaft kann ein weiterer Sicherheitskennwert im Eingabe-Modul 110 hinterlegt sein, welcher ein sicherheitsrelevantes Attribut des Sensors angibt. Dieser weitere Sicherheitskennwert wird vorzugsweise ebenfalls zum Ausgabe-Modul 210 übertragen, wobei dieser im dargestellten Beispiel von der Steuerung 300 empfangen und weiterübertragen wird. Dieser weitere Sicherheitskennwert kann als dritter Sicherheitskennwert, statt eines von der Steuerung 300 bezüglich der durch die Steuerung 300 ausgeführten Datenverarbeitung und/oder Datenübertragung ermittelten dritten Sicherheitskennwertes, oder als zusätzlicher Sicherheitskennwert in die Ermittlung der Sicherheitsintegrität durch das Ausgabe-Modul 210 eingehen.

Im dargestellten Beispiel bewirkt die Sicherheitsfunktion das Ausführen einer sicherheitsgerichteten Aktion eines Aktors 610, beispielsweise das Abschalten einer gefahrbringenden Einrichtung, beispielsweise eines Motors. Vorteilhaft ist im Ausgabe-Modul 210 ein vierter Sicherheitskennwert hinterlegt, welcher ein sicherheitsrelevantes Attribut des wenigstens einen an das Ausgabe-Modul 210 angeschlossenen Aktors 610 angibt, wobei das Ausgabe-Modul 210 die Sicherheitsintegrität der Sicherheitsfunktion auch in Abhängigkeit des vierten Sicherheitskennwertes prüft.

Denkbar ist auch, dass die Steuerung 300 aus einem von dem Eingabe-Modul 110 empfangenen Sicherheitskennwert und einem von der Steuerung 300 bezüglich der durch die Steuerung 300 ausgeführten Datenverarbeitung und/oder Datenübertragung ermittelten Sicherheitskennwert einen neuen Sicherheitskennwert ermittelt und diesen an das Ausgabe-Modul 210 weiterleitet, wobei dieser an das Ausgabe-Modul 210 weitergeleitete Sicherheitskennwert in die Ermittlung der Sicherheitsintegrität durch das Ausgabe-Modul 210 eingeht.

In dem in Fig. 1 dargestellten Automatisierungssystem sind eine Vielzahl weiterer Kombinationen von Modulen denkbar, welche ein Sicherheitssystem bilden können.

Wesentlich ist, dass jeweils das erste Teilsystem-Modul dazu ausgebildet ist, einen ersten Sicherheitskennwert bezüglich der durch das erste Teilsystem-Modul ausgeführten Datenverarbeitung und/oder Datenübertragung zu ermitteln und zu einem zweiten Teilsystem-Modul zu übertragen, und dass das zweite Teilsystem-Modul dazu ausgebildet ist, einen zweiten Sicherheitskennwert bezüglich der durch das zweite Teilsystem-Modul ausgeführten Datenverarbeitung und/oder Datenübertragung zu ermitteln, sowie dass das zweite Teilsystem-Modul wenigstens einen dritten Sicherheitskennwert bezüglich eines dritten Moduls empfängt, und dass das zweite Teilsystem-Modul dazu ausgebildet ist, in Abhängigkeit des ersten, zweiten und dritten Sicherheitskennwertes eine Sicherheitsintegrität der Sicherheitsfunktion zu ermitteln. Der dritte Sicherheitskennwert kann dabei von einem Teilsystem-Modul bezüglich der durch dieses Teilsystem-Modul ausgeführten Datenverarbeitung und/oder Datenübertragung ermittelt werden, oder in einem Teilsystem-Modul hinterlegt sein.

Ein Teilsystem-Modul kann aus einem Sicherheitskennwert, welchen es selbst bezüglich der durch dieses Teilsystem-Modul ausgeführten Datenverarbeitung und/oder Datenübertragung ermittelt und einem Sicherheitskennwert, welchen es von einem anderen Teilsystem-Modul empfängt, auch einen neuen Sicherheitskennwert ermitteln, welcher in das Ermitteln der Sicherheitsintegrität eingeht. Ein so ermittelter neuer Sicherheitskennwert kann beispielsweise auch den oben beschriebenen dritten Sicherheitskennwert bilden.

Es sind auch Sicherheitssysteme denkbar, welche mehrere Eingabe- und/oder Ausgabe-Module umfassen.

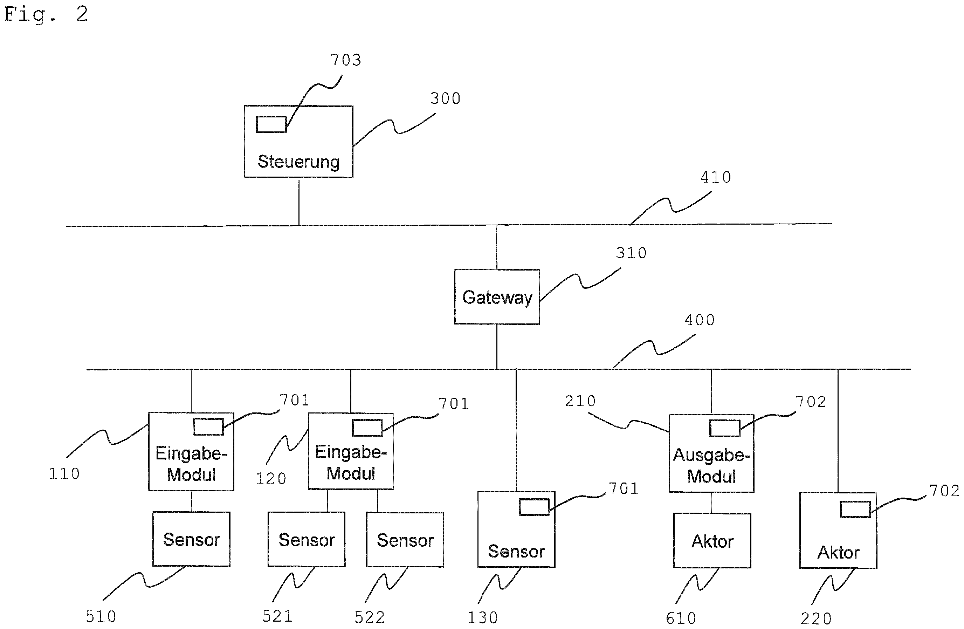

Das Automatisierungssystem kann auch, wie in Fig. 2 dargestellt, eine hierarchische Kommunikationsstruktur aufweisen, wobei in dem in Fig. 2 dargestellten Beispiel ein erstes Kommunikations-Netzwerk 400 und ein zweites Kommunikations-Netzwerk 410 vorgesehen ist, beispielsweise ausgebildet als Bussystem 400 und als Ethernet-basiertes Netzwerk 410. Im dargestellten Beispiel sind die Netzwerke 400 und 410 über ein Gateway 310 miteinander verbunden, wobei auch das Gateway 310 ein Teilsystem-Modul des Sicherheitssystems bilden kann.

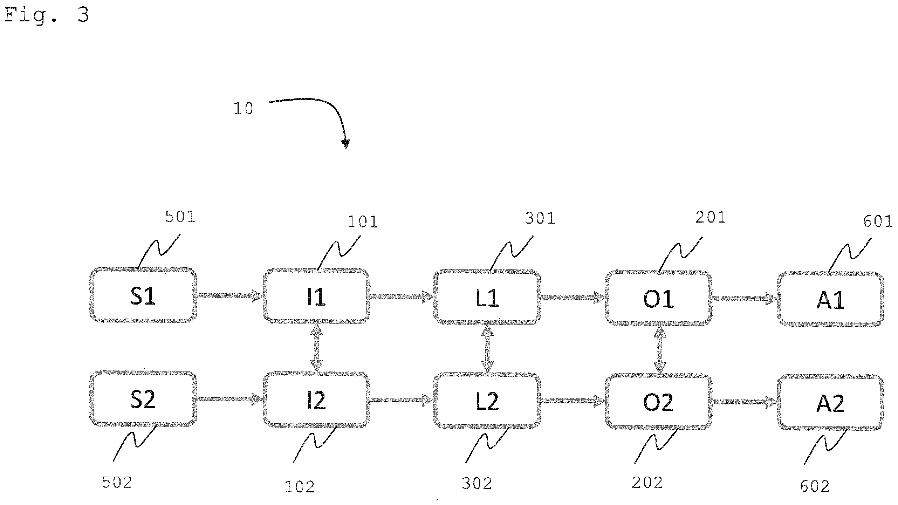

Fig. 3 zeigt schematisch ein beispielhaftes Sicherheitssystem 10, welches zweikanalig aufgebaut ist und zwei Sensoren 501 und 502, zwei Eingabe-Module 101 und 102, zwei Logik-Module 301 und 302, sowie zwei Ausgabe-Module 201 und 202, mit daran jeweils angeschlossenen Aktoren 601 und 602 umfasst.

In dem in Fig. 3 dargestellten Beispiel eines Sicherheitssystems 10 verläuft beispielsweise ein erster Datenübertragungskanal vom Sensor 501, über das Eingabe-Modul 101, das Logik-Modul 301 und das Ausgabe-Modul 201 zum Aktor 601, sowie ein zweiter Datenübertragungskanal vom Sensor 502, über das Eingabe-Modul 102, das Logik-Modul 302 und das Ausgabe-Modul 202 zum Aktor 602. Ferner sind im dargestellten Beispiel die Eingabe-Module 101 und 102, die Logik-Module 301 und 302, sowie die Ausgabe-Module 201 und 202 jeweils dazu ausgebildet, miteinander zu kommunizieren. Dementsprechend können auch andere Datenübertragungskanäle als die oben genannten definiert werden.

Die in Fig. 3 dargestellten Eingabe-Module 101 und 102 können beispielsweise in dem in Fig. 1 und Fig. 2 dargestellten Eingabe-Modul 120, sowie die Logik-Module 301 und 302 in der Steuerung 300 angeordnet sein.

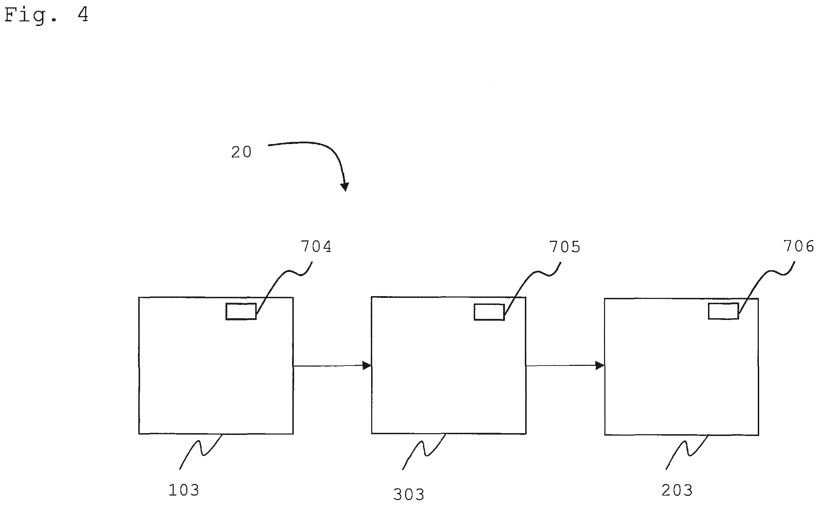

Fig. 4 zeigt ein weiteres Ausführungsbeispiel eines Sicherheitssystems 20, welches drei Maschinen 103, 303 und 203 umfasst. Die Sicherheitsfunktion im dargestellten Beispiel besteht darin, bei Ausfall der Maschine 103 automatisch auch die Maschinen 303 und 203 abzuschalten. Zur Überwachung der Sicherheitsintegrität dieser Sicherheitsfunktion weist die Maschine 103 eine Verarbeitungseinheit 704 auf und ist dazu ausgebildet, bei Auftreten eines Ausfalls einen ersten Sicherheitskennwert bezüglich der durch die Maschine 103 ausgeführten Datenverarbeitung und/oder Datenübertragung zu erzeugen und diesen zusammen mit einem Abschaltsignal an die Maschine 303 zu übertragen. Die Maschine 303 schaltet sich bei Empfang des Abschaltsignals ab und sendet ein Abschaltsignal zu der Maschine 203, zusammen mit dem von der Maschine 103 empfangenen ersten Sicherheitskennwert. Die Maschine 303 ist dazu ausgebildet, mittels einer Verarbeitungseinheit 705 einen dritten Sicherheitskennwert bezüglich der durch die Maschine 303 ausgeführten Datenverarbeitung und/oder Datenübertragung zu erzeugen und diesen zusammen mit dem von der Maschine 103 empfangenen ersten Sicherheitskennwert und dem Abschaltsignal zur Maschine 203 zu übertragen.

Die Maschine 203 schaltet sich bei Empfang des Abschaltsignals ab, ermittelt mittels einer Verarbeitungseinheit 706 einen zweiten Sicherheitskennwert bezüglich der durch die Maschine 203 ausgeführten Datenverarbeitung und/oder Datenübertragung, und ermittelt in Abhängigkeit des ersten, zweiten und dritten Sicherheitskennwertes eine Sicherheitsintegrität der Sicherheitsfunktion, vergleicht diese mit einem Sollwert und führt eine Sicherheitsreaktion aus, sofern die Sicherheitsintegrität unter dem Sollwert liegt.

Es sei angemerkt, dass jedes der beschriebenen Teilsystem-Module sowohl über eine Datenübertragungs- als auch über eine Datenempfangskomponente verfügen kann, so dass eine bidirektionale Datenübertragung möglich ist.

Durch die Erfindung wird vorteilhaft ermöglicht, dass sichere Eingabebaugruppen, Steuerungen und Ausgabebaugruppen zur Laufzeit nicht nur Variablenwerte, sondern auch Sicherheitskennwerte bearbeiten, um so zu entscheiden, ob die sicheren Ausgänge auch unter Berücksichtigung dieser erweiterten Sicherheitsinformationen angesteuert werden dürfen. Das ermöglicht sichere Berechnungen mit realistischen Werten, die sich im Betrieb auch dynamisch verändern können.

Die Programmierung und/oder Buskonfiguration schließt vorteilhaft auch die angeschlossenen sicheren Sensoren und Aktoren mit ein. Sensoren und Aktoren werden mit im Gerätekatalog der sicheren Programmieroberfläche verwaltet, um Parameter möglichst nur einmalig eingeben zu müssen bzw. einen Import zu ermöglichen. Durch die Sensor-/Aktor-Projektierung werden sichere E/A-Baugruppen auch implizit kompatibel zum Sensor/Aktor parametriert, so dass eine Geräteparametrierung durch den Anwender entfällt. Beim Einfügen von Sensoren und/oder Aktoren in das sichere Anwenderprogramm werden implizit auch die sicherheitstechnischen Kennwerte des Bauteils, insbesondere ein oder mehrere zugeordnete Sicherheitskennwerte, aus der Bauteilebibliothek bzw. dem Gerätekatalog in das sichere Anwenderprogramm übernommen.

Der Anwender gibt seine Vorgaben, d.h. die Spezifikation der Sicherheitsfunktionen, als Ergebnis der Risikobeurteilung in die sichere Programmieroberfläche ein und diese verifiziert selbsttätig die Ergebnisse. Hierzu verarbeitet das Gesamtsystem die Werte rechnerisch und liefert dem Anwender ein Ergebnis je Sicherheitsfunktion sowie ein Gesamtergebnis über alle Sicherheitsfunktionen (OK / nicht OK).

Die Eingabebaugruppe erhält Informationen über die angeschlossenen Sensoren, insbesondere deren Sicherheitskennwerte, wie zum Beispiel PFHd- oder PFD-Wert, kalkuliert intern anhand seiner Parametrierung und Geräteeigenschaften die eigenen PFHd- bzw. PFD-Werte je Kanal dazu und übergibt je Kanal die folgenden Werte an die nachgelagerte Einheit:
1. Signalwert (FALSE / TRUE /Analogwert)
2. Signalstatus (good/bad/ggf. Fehlercode)
3. PFHd-Wert (= PFHd Sensor + PFHd Eingabebaugruppe bei hoher Anforderungsrate)
4. PFD-Wert (= PFD Sensor + PFD Eingabebaugruppe bei niedriger Anforderungsrate)

Die nachgelagerte Einheit kann je nach Ausgestaltung des Sicherheitssystems eine sichere Steuerung oder ein anderes der oben beschriebenen Module oder gegebenenfalls sogar ein in einer Cloud angeordnetes Modul sein.

Die sichere Steuerung, als Beispiel für eine nachgelagerte Einheit, ist somit in der Lage zu beurteilen, ob die Information sicher genug ist.

Ein Code-Analyzer ermittelt die Signalflüsse in der sicheren Anwendersoftware und ermittelt wiederum darauf basierend die Ausgangssignale zur Weitergabe an die benachbarte Logikeinheit oder Ausgabebaugruppe.

Der Code-Analyzer stellt die Ergebnisse dem Anwender zur Verfügung. Bei Bedarf kann der Anwender hier das ermittelte Ergebnis nachbearbeiten.

## Patentansprüche

1. Verfahren zum Überwachen der Sicherheitsintegrität einer durch ein Sicherheitssystem (10, 20) bereitgestellten Sicherheitsfunktion, wobei das Sicherheitssystem wenigstens ein erstes und ein zweites Teilsystem-Modul umfasst, mit den Schritten:
- Verarbeiten von Daten zu funktional sicheren Daten in dem ersten Teilsystem-Modul,
- Ermitteln wenigstens eines ersten Sicherheitskennwertes durch das erste Teilsystem-Modul (101, 102, 103, 110) bezüglich der durch das erste Teilsystem-Modul (101, 102, 103, 110) ausgeführten Datenverarbeitung und/oder einer durch das erste Teilsystem-Modul (101, 102, 103, 110) ausgeführten Datenübertragung,
- Übertragen der funktional sicheren Daten und des ersten Sicherheitskennwertes vom ersten Teilsystem-Modul (101, 102, 103, 110) zum zweiten Teilsystem-Modul (201, 202, 203, 210),
- Ermitteln wenigstens eines zweiten Sicherheitskennwertes durch das zweite Teilsystem-Modul (201, 202, 203, 210) bezüglich einer durch das zweite Teilsystem-Modul (201, 202, 203, 210) ausgeführten Datenverarbeitung und/oder Datenübertragung, und
- Übertragen wenigstens eines dritten Sicherheitskennwertes zum zweiten Teilsystem-Modul (201, 202, 203, 210),
- Prüfen der Sicherheitsintegrität der Sicherheitsfunktion im zweiten Teilsystem-Modul (201, 202, 203, 210) in Abhängigkeit des ersten, zweiten und dritten Sicherheitskennwertes, und
- Auslösen einer vorbestimmten Sicherheitsreaktion in Abhängigkeit des Prüfergebnisses,
wobei
das erste Teilsystem-Modul als ein Eingabe-Modul (110) eines Automatisierungssystems ausgebildet ist, an welches ein Sensor (510) angeschlossen ist, wobei in dem ersten Teilsystem-Modul ein Sensorsignal mittels des Sensors (510) erfasst wird und das erfasste Sensorsignal zu den funktional sicheren Daten verarbeitet wird, und wobei der dritte Sicherheitskennwert ein sicherheitsrelevantes Attribut des Sensors (510) angibt, und wobei der dritte Sicherheitskennwert im ersten Teilsystem-Modul (101, 102, 103, 110) hinterlegt ist und vom ersten Teilsystem-Modul (101, 102, 103, 110) zum zweiten Teilsystem-Modul (201, 202, 203, 210) übertragen wird,
oder
der dritte Sicherheitskennwert durch wenigstens ein drittes Teilsystem-Modul (301, 302, 303, 300, 310) ermittelt und vom dritten Teilsystem-Modul zum zweiten Teilsystem-Modul übertragen wird, wobei das dritte Teilsystem-Modul zwischen dem ersten und zweiten Teilsystem-Modul angeordnet ist, und wobei das dritte Teilsystem-Modul des Sicherheitssystems den ersten Sicherheitskennwert empfängt und an das zweite Teilsystem-Modul (201, 202, 203, 210) weiterüberträgt.

2. Verfahren nach Anspruch 1, wobei das zweite Teilsystem-Modul als ein Ausgabe-Modul (210) des Automatisierungssystems ausgebildet ist, an welches ein Aktor (610) angeschlossen ist, und wobei im zweiten Teilsystem-Modul ein vierter Sicherheitskennwert hinterlegt ist, welcher ein sicherheitsrelevantes Attribut des wenigstens einen an das zweite Teilsystem-Modul angeschlossenen Aktors (610) angibt, und wobei das zweite Teilsystem-Modul die Sicherheitsintegrität der Sicherheitsfunktion in Abhängigkeit des vierten Sicherheitskennwertes prüft.

3. Verfahren nach einem der vorstehenden Ansprüche, wobei das dritte Teilsystem-Modul des Sicherheitssystems als Steuereinrichtung (300) des Automatisierungssystems ausgebildet ist.

4. Verfahren nach einem der vorstehenden Ansprüche, wobei wenigstens einer der Sicherheitskennwerte ein SIL-Wert, ein PL-Wert, ein PFHd-Wert oder ein PFD-Wert ist.

5. System (10, 20) eingerichtet zur Durchführung eines Verfahrens nach einem der Ansprüche 1 bis 4, ausgebildet zum Ausführen einer Sicherheitsfunktion, umfassend
- ein erstes Teilsystem-Modul, welches zum Verarbeiten von Daten zu funktional sicheren Daten ausgebildet ist, und ein zweites Teilsystem-Modul, welches zum Verarbeiten von Daten zu funktional sicheren Daten ausgebildet ist, wobei
- das erste Teilsystem-Modul (101, 102, 103, 110) über einen Datenübertragungskanal mit dem zweiten Teilsystem-Modul (201, 202, 203, 210) verbunden ist, und wobei
- das erste Teilsystem-Modul (101, 102, 103, 110) zum Ermitteln wenigstens eines ersten Sicherheitskennwertes bezüglich einer durch das erste Teilsystem-Modul (101, 102, 103, 110) ausgeführten Datenverarbeitung und/oder Datenübertragung und zum Übertragen des ersten Sicherheitskennwertes zum zweiten Teilsystem-Modul (201, 202, 203, 210) ausgebildet ist, und wobei
- das zweite Teilsystem-Modul (201, 202, 203, 210) zum Ermitteln wenigstens eines zweiten Sicherheitskennwerts bezüglich einer durch das zweite Teilsystem-Modul (201, 202, 203, 210) ausgeführten Datenverarbeitung und/oder Datenübertragung, zum Empfangen eines dritten Sicherheitskennwertes, zum Prüfen der Sicherheitsintegrität der Sicherheitsfunktion in Abhängigkeit des ersten, zweiten und dritten Sicherheitskennwertes, und zum Auslösen einer vorbestimmten Sicherheitsreaktion in Abhängigkeit des Prüfergebnisses ausgebildet ist, und wobei
das erste Teilsystem-Modul als ein Eingabe-Modul (110) eines Automatisierungssystems ausgebildet ist, an welches ein Sensor (510) angeschlossen ist, wobei das erste Teilsystem-Modul dazu ausgebildet ist, ein mittels des Sensors erfasstes Sensorsignal zu funktional sicheren Daten zu verarbeiten, und wobei der dritte Sicherheitskennwert ein sicherheitsrelevantes Attribut des Sensors (510) angibt, und wobei der dritte Sicherheitskennwert im ersten Teilsystem-Modul (101, 102, 103, 110) hinterlegt ist und das erste Teilsystem-Modul (101, 102, 103, 110) dazu ausgebildet ist, den dritten Sicherheitskennwert zum zweiten Teilsystem-Modul (201, 202, 203, 210) zu übertragen,
oder
das System wenigstens ein drittes Teilsystem-Modul (301, 302, 303, 300, 310) umfasst, welches zwischen dem ersten und zweiten Teilsystem-Modul angeordnet ist, wobei das dritte Teilsystem-Modul dazu ausgebildet ist, den dritten Sicherheitskennwert zu ermitteln und zum zweiten Teilsystem-Modul zu übertragen, und wobei das dritte Teilsystem-Modul dazu ausgebildet ist, den ersten Sicherheitskennwert zu empfangen und an das zweite Teilsystem-Modul (201, 202, 203, 210) weiterzuübertragen.

## Claims

1. A method for monitoring safety integrity of a safety function provided by a safety system (10, 20), the safety system comprising at least a first and a second subsystem module, comprising the steps of:
- processing data into functionally safe data in the first subsystem module;
- determining at least one first safety parameter by the first subsystem module (101, 102, 103, 110) with respect to the data processing performed by the first subsystem module (101, 102, 103, 110) and/or with respect to a data transfer performed by the first subsystem module (101, 102, 103, 110);
- transferring the functionally safe data and the first safety parameter from the first subsystem module (101, 102, 103, 110) to the second subsystem module (201, 202, 203, 210);
- determining at least one second safety parameter by the second subsystem module (201, 202, 203, 210) with respect to a data processing and/or data transfer performed by the second subsystem module (201, 202, 203, 210); and
- transferring at least one third safety parameter to the second subsystem module (201, 202, 203, 210);
- verifying the safety integrity of the safety function in the second subsystem module (201, 202, 203, 210) independence of the first, second and third safety parameters; and
- triggering a predetermined safety response on the basis of the verification result; wherein
the first subsystem module is in the form of an input module (110) of an automation system to which a sensor (510) is connected, wherein a sensor signal is captured by the sensor (510) in the first subsystem module and the captured sensor signal is processed into the functionally safe data, and wherein the third safety parameter specifies a safety-relevant attribute of the sensor (510), and wherein the third safety parameter is stored in the first subsystem module (101, 102, 103, 110) and is transferred from the first subsystem module (101, 102, 103, 110) to the second subsystem module (201, 202, 203, 210); or
the third safety parameter is determined by at least one third subsystem module (301, 302, 303, 300, 310) and is transferred from the third subsystem module to the second subsystem module, wherein the third subsystem module is arranged between the first and second subsystem modules, and wherein the third subsystem module of the safety system receives the first safety parameter and transfers it to the second subsystem module (201, 202, 203, 210).

2. The method according to claim 1, wherein the second subsystem module is in the form of an output module (210) of the automation system to which an actuator (610) is connected, and wherein the second subsystem module stores a fourth safety parameter that specifies a safety-relevant attribute of the at least one actuator (610) connected to the second subsystem module, and wherein the second subsystem module verifies the safety integrity of the safety function on the basis of the fourth safety parameter.

3. The method according to any one of the preceding claims, wherein the third subsystem module of the safety system is in the form of a control device (300) of the automation system.

4. The method according to any one of the preceding claims, wherein at least one of the safety parameters is an SIL value, a PL value, a PFHd value or a PFD value.

5. A system (10, 20) configured for performing a method according to any one of claims 1 to 4, which is adapted to perform a safety function comprising
- a first subsystem module which is adapted for processing data into functionally safe data; and a second subsystem module which is adapted for processing data into functionally safe data; wherein
- the first subsystem module (101, 102, 103, 110) is connected to the second subsystem module (201, 202, 203, 210) via a data transfer channel; and wherein
- the first subsystem module (101, 102, 103, 110) is adapted for determining at least one first safety parameter with respect to a data processing and/or data transfer performed by the first subsystem module (101, 102, 103, 110) and for transferring the first safety parameter to the second subsystem module (201, 202, 203, 210); and wherein
- the second subsystem module (201, 202, 203, 210) is adapted for determining at least one second safety parameter with respect to a data processing and/or data transfer performed by the second subsystem module (201, 202, 203, 210), for receiving a third safety parameter, for verifying the safety integrity of the safety function on the basis of the first, second and third safety parameters, and for triggering a predetermined safety response on the basis of the verification result; and wherein
the first subsystem module is in the form of an input module (110) of an automation system to which a sensor (510) is connected, wherein the first subsystem module is adapted for processing a sensor signal captured by the sensor into functionally safe data, and wherein the third safety parameter specifies a safety-relevant attribute of the sensor (510), and wherein the third safety parameter is stored in the first subsystem module (101, 102, 103, 110) and the first subsystem module (101, 102, 103, 110) is adapted for transferring the third safety parameter to the second subsystem module (201, 202, 203, 210); or
the system comprises at least one third subsystem module (301, 302, 303, 300, 310) which is arranged between the first and second subsystem modules, wherein the third subsystem module is adapted for determining the third safety parameter and for transferring it to the second subsystem module, and wherein the third subsystem module is adapted for receiving the first safety parameter and for forwarding it to the second subsystem module (201, 202, 203,210).

## Revendications

1. Procédé de surveillance de l'intégrité de la sécurité d'une fonction de sécurité mise à disposition par un système de sécurité (10, 20), dans lequel le système de sécurité comprend au moins un premier et un deuxième module de système partiel, comprenant les étapes suivantes :
- traitement de données en données fonctionnellement sûres dans le module de système partiel,
- détermination d'au moins une première valeur caractéristique de sécurité par le premier module de système partiel (101, 102, 103, 110) concernant le traitement de données effectué par le premier module de système partiel (101, 102, 103, 110) et/ou une transmission de données effectuée par le premier module de système partiel (101, 102, 103, 110),
- transmission des données fonctionnellement sûres et de la première valeur caractéristique de sécurité du premier module de système partiel (101, 102, 103, 110) vers le deuxième module de système partiel (201, 202, 203, 210),
- détermination d'au moins une deuxième valeur caractéristique de sécurité par le deuxième module de système partiel (201, 202, 203, 210) concernant un traitement de données et/ou une transmission de données effectués par le deuxième module de système partiel (201, 202, 203, 210) et
- transmission d'au moins une troisième valeur caractéristique de sécurité au deuxième module de système partiel (201, 202, 203, 210),
- vérification de l'intégrité de la sécurité de la fonction de sécurité dans le deuxième module de système partiel (201, 202, 203, 210) en fonction des première, deuxième et troisième valeurs caractéristiques de sécurité, et
- déclenchement d'une réaction de sécurité prédéterminée en fonction du résultat de la vérification,
dans lequel
le premier module de système partiel est conçu comme un module d'entrée (110) d'un système d'automatisation, auquel est raccordé un capteur (510), où, dans le premier module de système partiel, un signal de capteur est détecté au moyen du capteur (510) et le signal de capteur détecté est traité en données fonctionnellement sûres, et où la troisième valeur caractéristique de sécurité indique un attribut du capteur (510) important pour la sécurité, et où la troisième valeur caractéristique de sécurité est enregistrée dans le premier module de système partiel (101, 102, 103, 110) et est transmise du premier module de système partiel (101, 102, 103, 110) au deuxième module de système partiel (201, 202, 203, 210),
ou
la troisième valeur caractéristique de sécurité est déterminée par au moins un troisième module de système partiel (301, 302, 303, 300, 310) et est transmise du troisième module de système partiel au deuxième module de système partiel, où le troisième module de système partiel est disposé entre les premier et deuxième modules de système partiels et où le troisième module de système partiel du système de sécurité reçoit la première valeur caractéristique de sécurité et la transmet au deuxième module de système partiel (201, 202, 203, 210).

2. Procédé selon la revendication 1, dans lequel le deuxième module de système partiel est conçu comme un module de sortie (210) du système d'automatisation, auquel est raccordé un actionneur (610), et dans lequel, dans le deuxième module de système partiel, une quatrième valeur caractéristique de sécurité est enregistrée, qui indique un attribut important pour la sécurité de l'au moins un actionneur (610) raccordé au deuxième module de système partiel, et dans lequel le deuxième module de système partiel vérifie l'intégrité de la sécurité de la fonction de sécurité en fonction de la quatrième valeur caractéristique de sécurité.

3. Procédé selon l'une des revendications précédentes, dans lequel le troisième module de système partiel du système de sécurité est conçu comme un dispositif de commande (300) du système d'automatisation.

4. Procédé selon l'une des revendications précédentes, dans lequel au moins l'une des valeurs caractéristiques de sécurité est une valeur SIL, une valeur PL, une valeur PFHd ou une valeur PFD.

5. Système (10, 20) configuré pour l'exécution d'un procédé selon l'une des revendications 1 à 4, conçu pour l'exécution d'une fonction de sécurité, comprenant
- un premier module de système partiel qui est conçu pour le traitement de données en données fonctionnellement sûres et un deuxième module de système partiel qui est conçu pour le traitement de données en données fonctionnellement sûres, où
- le premier module de système partiel (101, 102, 103, 110) est relié par l'intermédiaire d'un canal de transmission de données avec le deuxième module de système partiel (201, 202, 203, 210) et où
- le premier module de système partiel (101, 102, 103, 110) est conçu pour la détermination d'au moins une première valeur caractéristique de sécurité concernant un traitement de données et/ou une transmission de données effectués par le premier module de système partiel (101, 102, 103, 110) et pour la transmission de la première valeur caractéristique de sécurité au deuxième module de système partiel (201, 202, 203, 210) et où
- le deuxième module de système partiel (201, 202, 203, 210) est conçu la détermination d'au moins une deuxième valeur caractéristique de sécurité concernant un traitement de données et/ou une transmission de données effectués par le deuxième module de système partiel (201, 202, 203, 210), pour la réception d'une troisième valeur caractéristique de sécurité, pour la vérification de l'intégrité de la sécurité de la fonction de sécurité en fonction des première, deuxième et troisième valeurs caractéristiques de sécurité, et pour le déclenchement d'une réaction de sécurité prédéterminée en fonction du résultat de la vérification et où
le premier module de système partiel est conçu comme un module d'entrée (110) d'un système d'automatisation, auquel est raccordé un capteur (510), où le premier module de système partiel est conçu pour traiter un signal de capteur détecté au moyen du capteur en données fonctionnellement sûres, et où la troisième valeur caractéristique de sécurité indique un attribut du capteur (510) important pour la sécurité, et où la troisième valeur caractéristique de sécurité est enregistrée dans le premier module de système partiel (101, 102, 103, 110) et le premier module de système partiel (101, 102, 103, 110) est conçu pour transmettre la troisième valeur caractéristique de sécurité au deuxième module de système partiel (201, 202, 203, 210),
ou
le système comprend au moins un troisième module de système partiel (301, 302, 303, 300, 310) qui est disposé entre les premier et deuxième modules de système partiels, où le troisième module de système partiel est conçu pour déterminer la troisième valeur caractéristique de sécurité et la transmettre au deuxième module de système partiel, et où le troisième module de système partiel est conçu pour recevoir la première valeur caractéristique de sécurité et pour la transmettre au deuxième module de système partiel (201, 202, 203, 210).
